# EUROPEAN PATENT SPECIFICATION

(11) **EP 3 051 219 B1**
(45) Date of publication and mention of the grant of the patent: **26.05.2021**
(21) Application number: 16150886.6
(22) Date of filing: 12.01.2016
(51) Int. Cl.: F24F 1/14, F25B 41/06, F25B 13/00, F24F 110/12, F24F 11/83

(54) **OUTDOOR UNIT OF AIR CONDITIONER AND AIR CONDITIONER**
AUSSENEINHEIT EINER KLIMAANLAGE UND KLIMAANLAGE
UNITE EXTERIEURE DE CONDITIONNEUR D'AIR ET LEDIT CONDITIONNEUR

(30) Priority: 29.01.2015 JP 2015015121
(43) Date of publication of application: 03.08.2016
(73) Proprietor: Fujitsu General Limited, Kanagawa 213-8502 (JP)
(72) Inventor: MAEDA, Noritaka, Kanagawa, 213-8502 (JP)
(74) Representative: Isarpatent

(56) References cited:
- EP-A1- 2 416 090
- EP-A1- 2 530 394
- GB-A- 2 305 744
- JP-A- 2011 232 011

## Description

### BACKGROUND

### 1. Technical Field

Embodiments of the present disclosure relate to an outdoor unit of an air conditioner including a heat exchanger with a plurality of refrigerant paths, and an air conditioner.

### 2. Description of the Related Art

An air conditioner for controlling a refrigerating cycle while changing a coolant throttle quantity by use of a closable motor-operated expansion valve is known from document GB 2 305 744 A. For a known air conditioner, an outdoor unit includes an outdoor heat exchanger with a plurality of refrigerant paths vertically disposed in parallel, for example. When the air conditioner performs heating operation, the outdoor heat exchanger serves as an evaporator. Accordingly, a refrigerant brought into a gas-liquid two-phase state or a liquid state in an indoor unit flows into the outdoor heat exchanger. At that time, the liquid refrigerant flows biased toward the lower refrigerant paths under the influence of gravity. This may cause reduction in heating capacity due to degradation in evaporating performance of the outdoor heat exchanger.

There has been proposed a method for correcting the bias in the flow rate of the refrigerant among a plurality of refrigerant paths as described below (for example, refer to JP-A 2011-232011). According to this method, capillary tube is provided in each of the refrigerant paths of the outdoor heat exchanger. The flow passage resistance of the capillary tube in a specific refrigerant path is set to be higher than the flow passage resistances of the capillary tubes in the other refrigerant paths. At the outdoor heat exchanger as described above, for example, the flow passage resistance of the capillary tube in the lower refrigerant path is set to be higher than the flow passage resistances of the capillary tubes in the other refrigerant paths. In this case, when the outdoor heat exchanger serves as an evaporator, the amount of the liquid refrigerant flowing into the lower path is regulated by the capillary tube. This corrects the bias in the flow rate of the refrigerant among the refrigerant paths. Accordingly, it is possible to suppress degradation in evaporating performance of the outdoor heat exchanger, thereby preventing reduction in heating capacity.

### SUMMARY

An outdoor unit of an air conditioner includes: an outdoor heat exchanger provided with a plurality of refrigerant paths including a flow rate-variable refrigerant path with a flow rate balancer, and including refrigerant paths without a flow rate balancer; an ambient air temperature detector that detects an ambient air temperature; and a controller that decreases a flow rate of a refrigerant flowing into the flow rate-variable refrigerant path in a case where the ambient air temperature detected by the ambient air temperature detector is equal to or higher than a threshold ambient air temperature as compared to a case where the ambient air temperature is lower than the threshold ambient air temperature, when the outdoor heat exchanger serves as an evaporator.

### BRIEF DESCRIPTION OF THE DRAWINGS

Fig. 1A is a diagram of a refrigerant circuit in an air conditioner according to an embodiment of the present disclosure, and Fig. 1B is a block diagram of an outdoor unit controller in the air conditioner;
Fig. 2A is a diagram illustrating a flow rate balancer in the embodiment of the present disclosure in the state where an open/close valve is open, and Fig. 2B is a diagram illustrating the flow rate balancer in the state where the open/close valve is closed; and
Fig. 3 is a flowchart of a process performed by the outdoor unit controller in the embodiment of the present disclosure.

### DESCRIPTION OF THE EMBODIMENTS

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

Reduction in heating capacity of the air conditioner due to decrease in the circulation volume of a refrigerant during heating operation becomes larger at lower ambient air temperatures. In particular, when the ambient air temperature is extremely low (for example, lower than -15°C), heating capacity may decrease significantly even with a slight decrease in the circulation volume of refrigerant. This is because, in the outdoor heat exchanger serving as an evaporator, the refrigerant is more unlikely to draw heat from the ambient air at lower ambient air temperatures, and thus the evaporating performance degrades significantly even with a slight decrease in refrigerant flow rate.

In the outdoor heat exchanger described in JP-A 2011-232011, the flow passage resistance of the capillary tube provided in each of the refrigerant paths decrease the circulation volume of refrigerant. Accordingly, when the ambient air temperature is extremely low, the heating capacity may decrease largely due to the significant degradation in the evaporating performance of the outdoor heat exchanger.

An object of the present disclosure is to provide an outdoor unit of an air conditioner. The outdoor unit can suppress degradation in air conditioning performance resulting from decrease in the circulation volume of refrigerant at lower ambient air temperatures while correcting the bias in the flow rate of the refrigerant among the refrigerant paths.

An outdoor unit of an air conditioner according to one aspect of the present disclosure includes: an outdoor heat exchanger provided with a plurality of refrigerant paths including a flow rate-variable refrigerant path; an ambient air temperature detector that detects an ambient air temperature; and a controller that decreases a flow rate of a refrigerant flowing into the flow rate-variable refrigerant path in a case where the ambient air temperature detected by the ambient air temperature detector is equal to or higher than a threshold ambient air temperature as compared to a case where the ambient air temperature is lower than the threshold ambient air temperature, when the outdoor heat exchanger serves as an evaporator.

In the above described outdoor unit of an air conditioner, a controller decreases a flow rate of a refrigerant flowing into the flow rate-variable refrigerant path in a case where the ambient air temperature detected by the ambient air temperature detector is equal to or higher than a threshold ambient air temperature as compared to a case where the ambient air temperature is lower than the threshold ambient air temperature, when the outdoor heat exchanger serves as an evaporator. Consequently, the outdoor unit can suppress degradation in air conditioning performance resulting from decrease in the circulation volume of refrigerant at lower ambient air temperatures while correcting the bias in the flow rate of the refrigerant among the refrigerant paths.

The embodiment of the present disclosure will be described below in detail with reference to the accompanying drawings. In the air conditioner according to this embodiment, three indoor units are coupled in parallel to one outdoor unit. Using all the indoor units simultaneously can perform cooling operation or heating operation. However, the mode of the present disclosure is not limited to the following embodiment. The mode of the present disclosure can be modified in various manners without deviating from the gist of the present disclosure.

### [Example]

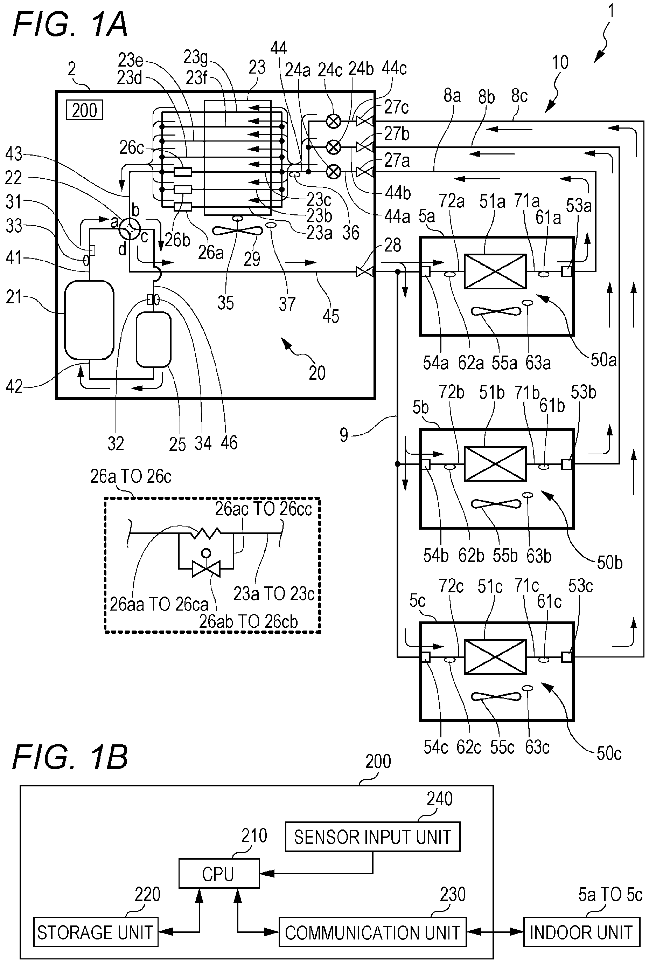

As illustrated in Fig. 1A, an air conditioner 1 in this embodiment includes one outdoor unit 2 and three indoor units 5a to 5c. The indoor units 5a to 5c are coupled in parallel to the outdoor unit 2 via pipes including a first liquid pipe 8a, a second liquid pipe 8b, a third liquid pipe 8c, and a gas pipe 9. That is, the air conditioner 1 includes the outdoor unit 2, the indoor units 5a to 5c, and the pipes coupling the outdoor unit 2 to the indoor units 5a to 5c.

The foregoing components are coupled in a manner as described below. One end of the first liquid pipe 8a is coupled to a first liquid-side closing valve 27a of the outdoor unit 2. The other end of the first liquid pipe 8a is coupled to a liquid pipe coupling portion 53a of the indoor unit 5a. One end of the second liquid pipe 8b is coupled to a second liquid-side closing valve 27b of the outdoor unit 2. The other end of the second liquid pipe 8b is coupled to a liquid pipe coupling portion 53b of the indoor unit 5b. One end of the third liquid pipe 8c is coupled to a third liquid-side closing valve 27c of the outdoor unit 2. The other end of the third liquid pipe 8c is coupled to a liquid pipe coupling portion 53c of the indoor unit 5c.

One end of the gas pipe 9 is coupled to a gas-side closing valve 28 of the outdoor unit 2. The other end of the gas pipe 9 is branched in three, and the gas pipe 9 has three other ends. The three other ends of the gas pipe 9 are coupled to respective gas pipe coupling portions 54a to 54c of the indoor units 5a to 5c. In this manner, the outdoor unit 2 is couple to the indoor units 5a to 5c via the first liquid pipe 8a, the second liquid pipe 8b, the third liquid pipe 8c, and the gas pipe 9. These components constitutes a refrigerant circuit 10 in the air conditioner 1.

The outdoor unit 2 includes a compressor 21, a four-way valve 22, an outdoor heat exchanger 23, a first expansion valve 24a, a second expansion valve 24b, a third expansion valve 24c, an accumulator 25, a first flow rate balancer 26a, a second flow rate balancer 26b, a third flow rate balancer 26c, the first liquid-side closing valve 27a, the second liquid-side closing valve 27b, the third liquid-side closing valve 27c, the gas-side closing valve 28, an outdoor fan 29, and an outdoor unit controller 200. These members except for the outdoor fan 29 and the outdoor unit controller 200 are mutually coupled via refrigerant pipes described later in detail to constitute an outdoor unit refrigerant circuit 20 as part of the refrigerant circuit 10.

The compressor 21 is a capacity-variable compressor. That is, the compressor 21 is driven by a motor not illustrated controlled in rotation speed by an inverter. Accordingly, the operating capacity of the compressor 21 is variable. The refrigerant discharge opening of the compressor 21 is coupled to a port ***a*** of the four-way valve 22 described later via a discharge pipe 41. The refrigerant intake side of the compressor 21 is coupled to the refrigerant outflow side of the accumulator 25 via an intake pipe 42.

The four-way valve 22 is a valve for switching the directions in which the refrigerant flows. The four-way valve 22 includes four ports ***a**, **b**, **c**,* and ***d**.* The port ***a*** is coupled to the refrigerant discharge opening of the compressor 21 via the discharge pipe 41. The port b is coupled to each one end of first to seventh refrigerant paths 23a to 23g included in the outdoor heat exchanger 23 described later via a refrigerant pipe 43. The port c is coupled to the refrigerant inflow side of the accumulator 25 via a refrigerant pipe 46. The port ***d*** is coupled to the gas-side closing valve 28 via an outdoor unit gas pipe 45.

The outdoor heat exchanger 23 exchanges heat between the refrigerant and the ambient air taken into the outdoor unit 2 from an inlet not illustrated by rotation of the outdoor fan 29 described later. The outdoor heat exchanger 23 has the first refrigerant path 23a, the second refrigerant path 23b, the third refrigerant path 23c, the fourth refrigerant path 23d, the fifth refrigerant path 23e, the sixth refrigerant path 23f, and the seventh refrigerant path 23g. These seven refrigerant paths are vertically disposed in parallel in order of the first refrigerant path 23a, the second refrigerant path 23b, ..., and the seventh refrigerant path 23g from the bottom. As described above, one end of each of the first refrigerant path 23a to the seventh refrigerant path 23g is coupled to the port ***b*** of the four-way valve 22 via the refrigerant pipe 43. The other end of each of the first refrigerant path 23a to the seventh refrigerant path 23g is coupled to one end of each of a first liquid branch pipe 44a to a third liquid branch pipe 44c via an outdoor unit liquid pipe 44. The outdoor heat exchanger 23 serves as a condenser when the refrigerant circuit 10 is in a cooling cycle and serves as an evaporator when the refrigerant circuit 10 is in a heating cycle.

The first expansion valve 24a is provided in the first liquid branch pipe 44a. One end of the first liquid branch pipe 44a is coupled to the outdoor unit liquid pipe 44, and the other end of the same is coupled to the first liquid-side closing valve 27a. The second expansion valve 24b is provided in the second liquid branch pipe 44b. One end of the second liquid branch pipe 44b is coupled to the outdoor unit liquid pipe 44, and the other end of the same is coupled to the second liquid-side closing valve 27b. The third expansion valve 24c is provided in the third liquid branch pipe 44c. One end of the third liquid branch pipe 44c is coupled to the outdoor unit liquid pipe 44, and the other end of the same is coupled to the third liquid-side closing valve 27c.

The degrees of opening of the first expansion valve 24a, the second expansion valve 24b, and the third expansion valve 24c are controlled by the outdoor unit controller 200. By controlling the degree of opening of the first expansion valve 24a, the flow rate of the refrigerant flowing into the indoor unit 5a is adjusted. By controlling the degree of opening of the second expansion valve 24b, the flow rate of the refrigerant flowing into the indoor unit 5b is adjusted. By controlling the degree of opening of the third expansion valve 24c, the flow rate of the refrigerant flowing into the indoor unit 5c is adjusted. The first expansion valve 24a, the second expansion valve 24b, and the third expansion valve 24c are electronic expansion valves driven by a pulse motor not illustrated. The degrees of opening of the first expansion valve 24a, the second expansion valve 24b, and the third expansion valve 24c are adjusted according to the number of pulses given by the pulse motor.

As described above, the refrigerant inflow side of the accumulator 25 is coupled to the port ***c*** of the four-way valve 22 via the refrigerant pipe 46. The refrigerant outflow side of the accumulator 25 is coupled to the refrigerant suction opening of the compressor 21 via the intake pipe 42. The accumulator 25 separates the refrigerant flowing therein into a gas refrigerant and a liquid refrigerant to send the gas refrigerant to the compressor 21.

The first flow rate balancer 26a is provided in the first refrigerant path (flow rate-variable refrigerant path) 23a at the four-way valve 22 side. The second flow rate balancer 26b is provided in the second refrigerant path (flow rate-variable refrigerant path) 23b at the four-way valve 22 side. The third flow rate balancer 26c is provided in the third refrigerant path (flow rate-variable refrigerant path) 23c at the four-way valve 22 side. As described above, the first refrigerant path 23a to the third refrigerant path 23c are the refrigerant paths with the first flow rate balancers 26a to the third flow rate balancer 26c, respectively.

In this embodiment, the first flow rate balancer 26a, the second flow rate balancer 26b, and the third flow rate balancer 26c are the same in configuration. Accordingly, only the first flow rate balancer 26a will be described below and descriptions of the second flow rate balancer 26b and the third flow rate balancer 26c will be omitted. In Fig. 1A, the members of the second flow rate balancer 26b corresponding to the members of the first flow rate balancer 26a are given the reference numerals given to the members of the first flow rate balancer 26a in which the last symbol a is replaced with b. Similarly, the members of the third flow rate balancer 26c corresponding to the members of the first flow rate balancer 26a are given the reference numerals given to the members of the first flow rate balancer 26a in which the last symbol a is replaced with c.

The first flow rate balancer 26a has a capillary tube 26aa as a flow rate regulator with a predetermined flow passage resistance, an open/close valve 26ab as an open/close device, and a bypass pipe 26ac. The capillary tube 26aa regulates the amount of the refrigerant flowing through the first refrigerant path 23a. That is, the capillary tube 26aa decreases the amount of the refrigerant flowing through the first refrigerant path 23a to be smaller than the amount of the refrigerant flowing through each of the fourth refrigerant path 23d to the seventh refrigerant path 23g without flow rate balancers. The bypass pipe 26ac is coupled to the first refrigerant path 23a bypassing the capillary tube 26aa. The open/close valve 26ab is provided in the bypass pipe 26ac. When being opened, the open/close valve 26ab allows passage of the refrigerant in the bypass pipe 26ac. When being closed, the open/close valve 26ab shuts off the passage of the refrigerant in the bypass pipe 26ac. Therefore, when the open/close valve 26ab is opened, the refrigerant flows into the bypass pipe 26ac bypassing the capillary tube 26aa. Accordingly, the flow rate of the refrigerant is not regulated by the capillary tube 26aa. When the open/close valve 26ab is closed, the refrigerant does not flow into the bypass pipe 26ac but flows through the capillary tube 26aa. As a result, the flow rate of the refrigerant is regulated by the capillary tube 26aa.

The outdoor fan 29 is a propeller fan made from a resin material and is disposed in the vicinity of the outdoor heat exchanger 23. The outdoor fan 29 is rotated by a fan motor not illustrated. Accordingly, the ambient air is taken into the outdoor unit 2 from an inlet not illustrated provided in the outdoor unit 2. Further, the ambient air having undergone heat exchange with the refrigerant flowing through the first refrigerant path 23a to the seventh refrigerant path 23 g in the outdoor heat exchanger 23 is released to the outside of the outdoor unit 2 from an outlet not illustrated provided in the outdoor unit 2.

Besides the members described above, the outdoor unit 2 is provided with various sensors. As illustrated in Fig. 1A, the discharge pipe 41 is provided with a high-pressure sensor 31 and a discharge temperature sensor 33. The high-pressure sensor 31 detects the pressure of the refrigerant discharged from the compressor 21. The discharge temperature sensor 33 detects the temperature of the refrigerant discharged from the compressor 21. The refrigerant pipe 46 is provided with a low-pressure sensor 32 and an intake temperature sensor 34 in the vicinity of the refrigerant inflow side of the accumulator 25. The low-pressure sensor 32 detects the pressure of the refrigerant taken into the compressor 21. The intake temperature sensor 34 detects the temperature of the refrigerant taken into the compressor 21.

The outdoor heat exchanger 23 is provided with an outdoor heat exchange temperature sensor 35 that detects the temperature of the outdoor heat exchanger 23. The outdoor unit liquid pipe 44 is provided with a refrigerant temperature sensor 36 that detects the temperature of the refrigerant flowing into the outdoor heat exchanger 23 or the refrigerant flowing out of the outdoor heat exchanger 23. In addition, the outdoor unit 2 is provided with an ambient air temperature sensor 37 as an ambient air temperature detector detecting the temperature of the outdoor flowing into the outdoor unit 2, that is, the ambient air temperature, in the vicinity of the inlet not illustrated of the outdoor unit 2.

The outdoor unit 2 is also provided with the outdoor unit controller 200. The outdoor unit controller 200 is mounted on a control substrate stored in an electrical equipment box not illustrated of the outdoor unit 2. The outdoor unit 2 includes a CPU 210, a storage unit 220, a communication unit 230, and a sensor input unit 240 as illustrated in Fig. 1B. The CPU 210 is a controller of the outdoor unit 2.

The storage unit 220 includes a ROM and a RAM. The storage unit 220 stores control programs for the outdoor unit 2, the detection values corresponding to detection signals from the various sensors, the driving states of the compressor 21 and the outdoor fan 29, and others. The communication unit 230 is an interface that communicates with the indoor units 5a to 5c. The sensor input unit 240 obtains the results of detection by the various sensors of the outdoor unit 2 to output the same to the CPU 210. The detection values (detection results) from the various sensors are input into the CPU 210 via the sensor input unit 240. In addition, operation start/stop signals transmitted from the indoor units 5a to 5c and operation information signals including operation information (setting temperature, indoor temperature, and others) are input into the CPU 210 via the communication unit 230. The CPU 210 controls, on the basis of the various kinds of input information, the degree of opening of each of the first expansion valve 24a to the third expansion valve 24c, the driving of the compressor 21 and the outdoor fan 29, and the opening/closing of the open/close valves 26ab to 26cb of the respective first flow rate balancer 26a to third flow rate balancer 26c.

Next, the three indoor units 5a to 5c will be described. The three indoor units 5a to 5c include indoor heat exchangers 51a to 51c, liquid pipe coupling portions 53a to 53c, gas pipe coupling portions 54a to 54c, and indoor fans 55a to 55c, respectively. The indoor heat exchangers 51a to 51c are coupled respectively with the liquid pipe coupling portions 53a to 53c and the gas pipe coupling portions 54a to 54c via refrigerant pipes described later in detail to constitute indoor unit refrigerant circuits 50a to 50c as part of the refrigerant circuit 10 respectively.

The indoor units 5a to 5c are the same in configuration. Accordingly, only the configuration of the indoor unit 5a will be described below and descriptions of the other indoor units 5b and 5c will be omitted. In Fig. 1A, the members of the indoor unit 5b corresponding to the members of the indoor unit 5a are given the reference numerals given to the members of the indoor unit 5a in which the last symbol a is replaced with b. Similarly, the members of the indoor unit 5c corresponding to the members of the indoor unit 5a are given the reference numerals given to the members of the indoor unit 5a in which the last symbol a is replaced with c.

The indoor heat exchanger 51a exchanges heat between the refrigerant and the indoor air taken into the indoor unit 5a from the suction opening not illustrated included in the indoor unit 5a by the rotation of the indoor fan 55a described later. One of refrigerant entry/exit openings of the indoor heat exchanger 51a is coupled to the liquid pipe coupling portion 53a via an indoor unit liquid pipe 71a. The other refrigerant entry/exit opening of the indoor heat exchanger 51a is coupled to the gas pipe coupling portion 54a via an indoor unit gas pipe 72a. The refrigerant pipes are coupled to the liquid pipe coupling portion 53a and the gas pipe coupling portion 54a by welding or with flare nuts or the like. The indoor heat exchanger 51a serves as an evaporator when the indoor unit 5a performs cooling operation, and serves as a condenser when the indoor unit 5a performs heating operation.

The indoor fan 55a is a cross-flow fan made from a resin material and is disposed in the vicinity of the indoor heat exchanger 51a. The indoor fan 55a is rotated by a fan motor not illustrated. Accordingly, the indoor air is taken into the indoor unit 5a from a suction opening not illustrated. Further, the indoor air having undergone heat exchange with the refrigerant in the indoor heat exchanger 51a is supplied to the room from a blow opening not illustrated included in the indoor unit 5a.

Besides the members described above, the indoor unit 5a is provided with various sensors. The indoor unit liquid pipe 71a is provided with a liquid-side temperature sensor 61a. The liquid-side temperature sensor 61a detects the temperature of the refrigerant flowing into the indoor heat exchanger 51a or the refrigerant flowing out of the indoor heat exchanger 51a. The indoor unit gas pipe 72a is provided with a gas-side temperature sensor 62a. The gas-side temperature sensor 62a detects the temperature of the refrigerant flowing out of the indoor heat exchanger 51a or the refrigerant flowing into the indoor heat exchanger 51a. The indoor unit 5a is provided with an indoor temperature sensor 63a in the vicinity of a suction opening. The indoor temperature sensor 63a detects the temperature of the indoor air flowing into the indoor unit 5a (that is, the indoor temperature).

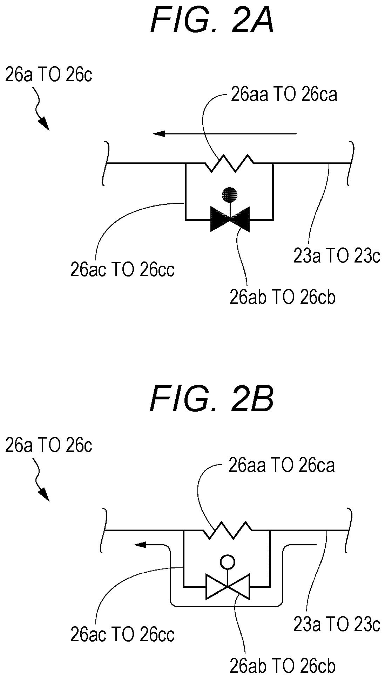

Next, the flow of the refrigerant in the refrigerant circuit 10 and the operations of the members when the air conditioner 1 of this embodiment performs heating operation will be described with reference to Figs. 1A, 2A, and 2B. In the air conditioner 1 of this embodiment, the opening/closing state of each of the open/close valves 26ab to 26cb of the respective first flow rate balancer 26a to third flow rate balancer 26c vary depending on whether the ambient air temperature detected by the ambient air temperature sensor 37 is equal to or higher than a threshold ambient air temperature (for example, -15°C) or the ambient air temperature is lower than the threshold ambient air temperature. The threshold ambient air temperature is as described below. That is, when the ambient air temperature is lower than the threshold ambient air temperature, the heating capacity of the air conditioner 1 decreases significantly due to reduction in the circulation volume of refrigerant. The threshold ambient air temperature is determined (confirmed) in advance by experiments or the like.

Hereinafter, descriptions will be first given as to the flow of the refrigerant in the refrigerant circuit 10 and the operations of the members in the case where the ambient air temperature detected by the ambient air temperature sensor 37 is equal to or higher than the threshold ambient air temperature. Then, descriptions will be given as to the flow of the refrigerant in the refrigerant circuit 10 and the operations of the members in the case where the ambient air temperature detected by the ambient air temperature sensor 37 is lower than the threshold ambient air temperature.

The following descriptions are based on the assumption that the indoor units 5a to 5c perform heating operation. The detailed descriptions of the case where the indoor units 5a to 5c perform cooling operation or dehumidifying operation will be omitted. In addition, the arrows in Fig. 1A indicate the flow of the refrigerant. Further, Figs. 2A and 2B illustrate the opened open/close valves 26ab to 26cb in a void shape, and illustrate the closed open/close valves 26ab to 26cb in a solid filled shape.

### <The case where the ambient air temperature is equal to or higher than the threshold ambient air temperature>

As illustrated in Fig. 1A, when the indoor units 5a to 5c perform heating operation, that is, when the refrigerant circuit 10 is in the heating cycle, the CPU 210 of the outdoor unit controller 200 switches the four-way valve 22 such that the ports ***a*** and *d* of the four-way valve 22 communicate with each other and the ports b and *c* of the same communicate with each other as shown by solid lines in Fig. 1A. Accordingly, the outdoor heat exchanger 23 serves as an evaporator and the indoor heat exchangers 51a to 51c serve as condensers. The CPU 210 activates the compressor 21 and the outdoor fan 29. The CPU 210 further controls the opening/closing of each of the open/close valves 26ab to 26cb of the respective first flow rate balancer 26a to third flow rate balancer 26c. In this example, the ambient air temperature obtained from the ambient air temperature sensor 37 is equal to or higher than the threshold ambient air temperature. Accordingly, the CPU 210 closes the open/close valves 26ab to 26cb as illustrated in Fig. 2A.

The high-pressure refrigerant discharged from the compressor 21 flows from the discharge pipe 41 into the four-way valve 22. Further, the refrigerant flows from the four-way valve 22 through the outdoor unit gas pipe 45 and enters into the gas pipe 9 via the gas-side closing valve 28. The refrigerant having flown into the gas pipe 9 then branches and enters into the indoor units 5a to 5c via the gas pipe coupling portions 54a to 54c. The refrigerant having flown into the indoor units 5a to 5c then flows through the indoor unit gas pipes 72a to 72c and enters into the indoor heat exchangers 51a to 51c respectively. The refrigerant is condensed through heat exchange with the indoor air taken into the indoor units 5a to 5c by the rotation of the indoor fans 55a to 55c. In this manner, the indoor heat exchangers 51a to 51c serve as condensers to blow the indoor air having undergone heat exchange with the refrigerant in the indoor heat exchangers 51a to 51c into the room from blow openings not illustrated. Accordingly, the room with the indoor units 5a to 5c is heated.

The refrigerant having flown out of the indoor heat exchangers 51a to 51c flows through the respective indoor unit liquid pipes 71a to 71c and enters into the respective first liquid pipe 8a to third liquid pipe 8c via the respective liquid pipe coupling portions 53a to 53c. The refrigerant having flown into the first liquid pipe 8a to the third liquid pipe 8c enters into the outdoor unit 2 via the respective first liquid-side closing valve 27a to third liquid-side closing valve 27c. After that, the refrigerant is decompressed when passing through each of the first expansion valve 24a to the third expansion valve 24c while flowing through each of the first liquid branch pipe 44a to the third liquid branch pipe 44c.

The refrigerant decompressed by each of the expansion valves flows from each of the first liquid branch pipe 44a to the third liquid branch pipe 44c into the outdoor unit liquid pipe 44 and joins together. Then, the refrigerant flows into the outdoor heat exchanger 23 and branches to the first refrigerant path 23a to the seventh refrigerant path 23g. The refrigerant having entered into the outdoor heat exchanger 23 and flown through each of the first refrigerant path 23a to the seventh refrigerant path 23g is evaporated through heat exchange with the ambient air taken into the outdoor unit 2 by the rotation of the outdoor fan 29.

When the refrigerant flows through each of the first refrigerant path 23a to the seventh refrigerant path 23g, each of the open/close valves 26ab to 26cb of the respective first flow rate balancer 26a to third flow rate balancer 26c of the respective first refrigerant path 23a to third refrigerant path 23c is closed as illustrated in Fig. 2A. Accordingly, the refrigerant having entered into each of the first flow rate balancer 26a to the third flow rate balancer 26c flows through the capillary tubes 26aa to 26ca respectively.

Accordingly, the amount of the refrigerant flowing through each of the first refrigerant path 23a to the third refrigerant path 23c is regulated by the flow passage resistance in each of the respective capillary tubes 26aa to 26ca, and is lower than the amount of the refrigerant flowing through each of the other refrigerant paths (the fourth refrigerant path 23d to the seventh refrigerant path 23g) without the flow rate balancer. Therefore, even when the refrigerant in the gas-liquid two-phase state or in the liquid state enters into the outdoor heat exchanger 23, it is possible to prevent the situation in which the liquid refrigerant flows biased toward the lower refrigerant paths (in this example, the first refrigerant path 23a to the third refrigerant path 23c) under the influence of gravity. In this manner, the flow of the refrigerant in the outdoor heat exchanger 23 is unlikely to be biased toward the lower refrigerant paths. This suppresses the degradation in evaporating performance of the outdoor heat exchanger 23. As a result, it is possible to ensure sufficient heating capacity.

The refrigerant having flown out of the refrigerant pipe 43 from each of the first refrigerant path 23a to the seventh refrigerant path 23g of the outdoor heat exchanger 23 flows through the refrigerant pipe 46 and enters into the accumulator 25 via the four-way valve 22. After that, the refrigerant is divided by the accumulator 25 into a gas refrigerant and a liquid refrigerant. The gas refrigerant having flown out of the accumulator 25 flows through the intake pipe 42 to be sucked into the compressor 21 and compressed again there.

### <The case where the ambient air temperature is lower than the threshold ambient air temperature>

When the ambient air temperature detected by the ambient air temperature sensor 37 is lower than the threshold ambient air temperature, the flowing of the refrigerant and the operations of the refrigerant circuit 10 except for the flowing of the refrigerant and the operations related to the opening/closing control of the open/close valves 26ab to 26cb of the respective first flow rate balancer 26a to third flow rate balancer 26c, are the same as those in the foregoing case where the ambient air temperature is equal to or higher than the threshold ambient air temperature, and therefore descriptions thereof will be omitted. Hereinafter, the flow of the refrigerant in each of the first flow rate balancer 26a to the third flow rate balancer 26c and its effect will be described.

In this case, the ambient air temperature obtained from the ambient air temperature sensor 37 is lower than the threshold ambient air temperature. Accordingly, as illustrated in Fig. 2B, the CPU 210 opens the open/close valves 26ab to 26cb. In this state, when the refrigerant flows through each of the refrigerant paths of the outdoor heat exchanger 23, the refrigerant having entered into each of the first flow rate balancer 26a to the third flow rate balancer 26c does not flow through each of the respective capillary tubes 26aa to 26ca but flows through each of the respective bypass pipe 26ac to 26cc as illustrated in Fig. 2B. Accordingly, the amount of the refrigerant flowing through each of the first refrigerant path 23a to the third refrigerant path 23c is not regulated. Thus, the amount of the refrigerant flowing through each of the first flow rate balancer 26a to the third flow rate balancer 26c is unlikely to decrease. Therefore, it is possible to suppress reduction in the circulation volume of the refrigerant in the refrigerant circuit 10. As a result, it is possible to suppress degradation in heating capacity resulting from the reduction in the circulation volume of the refrigerant.

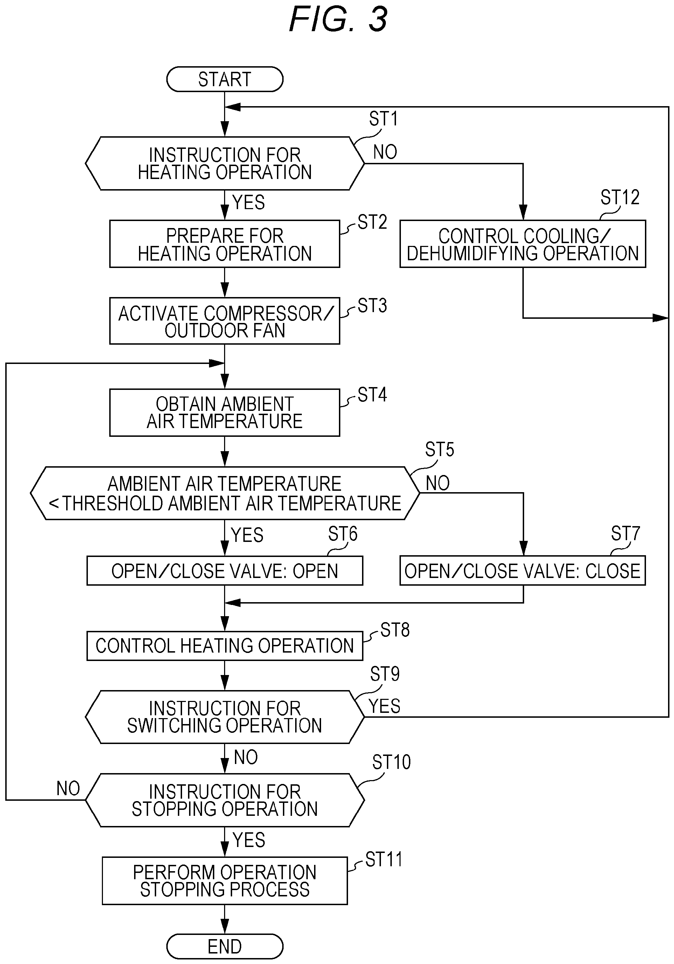

Next, the process performed by the CPU 210 of the outdoor unit controller 200 when the air conditioner 1 according to this embodiment performs heating operation will be described with reference to the flowchart of Fig. 3. In the flowchart of Fig. 3, the symbol ST indicates the steps in the process and the numbers following the symbol ST indicate the step numbers. Fig. 3 describes the process mainly related to control on the circulation volume of the refrigerant depending on the ambient air temperature. Descriptions of other processes, for example, general processes related to the air conditioner 1 such as controls under operating conditions specified by the user when heating operation is performed will be omitted.

First, the CPU 210 determines whether the operating instruction from the user is an instruction for heating operation (ST1). When the instruction is not an instruction for heating operation (ST1-No), the CPU 210 controls cooling operation or dehumidifying operation (ST12), and then returns the process to ST1. The control of cooling operation or dehumidifying operation means a general control during cooling operation or dehumidifying operation. For example, the CPU 210 operates the four-way valve 22 to switch a refrigerant circuit 10 such that the outdoor heat exchanger 23 serves as a condenser and the indoor heat exchangers 51a to 51c serve as evaporators. The CPU 210 also activates the compressor 21 and the outdoor fan 29 at the rotation speed according to the performance required by the indoor units 5a to 5c during cooling operation or dehumidifying operation.

When determining that the instruction from the user is an instruction for heating operation (ST1-Yes), the CPU 210 makes preparations for heating operation (ST2). At the preparations for heating operation, the CPU 210 operates the four-way valve 22 to switch the refrigerant circuit 10 such that the outdoor heat exchanger 23 serves as an evaporator and the indoor heat exchangers 51a to 51c serve as condensers. That is, the CPU 210 brings the refrigerant circuit 10 into the state illustrated in Fig. 1A.

Next, the CPU 210 activates the compressor 21 and the outdoor fan 29 (ST3). Specifically, the CPU 210 activates the compressor 21 and the outdoor fan 29 at the rotation speed according to the performance required by the indoor units 5a to 5c.

Next, the CPU 210 obtains the ambient air temperature detected by the ambient air temperature sensor 37 via the sensor input unit 240 (ST4). The CPU 210 stores the obtained ambient air temperature in the storage unit 220.

Next, the CPU 210 determines whether the obtained ambient air temperature is lower than the threshold ambient air temperature (ST5). When the obtained ambient air temperature is lower than the threshold ambient air temperature (ST5-Yes), the CPU 210 opens the open/close valves 26ab to 26cb of the respective first flow rate balancer 26a to third flow rate balancer 26c (ST6), and then moves the process to ST8.

When determining at ST5 that the obtained ambient air temperature is not lower than the threshold ambient air temperature (ST5-No), the CPU 210 closes the open/close valves 26ab to 26cb of the respective first flow rate balancer 26a to third flow rate balancer 26c (ST7), and then moves the process to ST8.

After ST6 or ST7, the CPU 210 performs a heating operation control (ST8). At the heating operation control, the CPU 210 receives via the communication unit 230 an operation information signal including operation information (setting temperature, indoor temperature, and others) transmitted from the indoor units 5a to 5c. The CPU 210 further controls the driving of the compressor 21 and the outdoor fan 29 and the degree of opening of each of the first expansion valve 24a to the third expansion valve 24c on the basis of the operation information signal.

Next, the CPU 210 determines whether there is an instruction for switching operation from the user (ST9). The instruction for switching operation is an instruction for switching from the current operation to another operation, for example, switching from heating operation to cooling operation or dehumidifying operation. When there is an instruction for switching operation (ST9-Yes), the CPU 210 returns the process to ST1.

When there is no instruction for switching operation (ST9-No), the CPU 210 determines whether there is an instruction for stopping operation (ST10). The instruction for stopping operation is an instruction for stopping the operation of each of the indoor units 5a to 5c.

When there is no instruction for stopping operation (STIO-No), the CPU 210 returns the process to ST4. When there is an instruction for stopping operation (ST10-Yes), the CPU 210 performs an operation stopping process (ST11), and terminates the process. At the operation stopping process, the CPU 210 stops the compressor 21 and the outdoor fan 29.

As described above, at the air conditioner 1 in this embodiment, when the outdoor heat exchanger 23 serves as an evaporator, that is, when the air conditioner 1 performs heating operation, the CPU 210 opens each of the open/close valves 26ab to 26cb so as not to regulate the amount of the refrigerant flowing through each of the first refrigerant path 23a to third refrigerant path 23c in the case where the ambient air temperature detected by the ambient air temperature sensor 37 is lower than the predetermined threshold ambient air temperature. In contrast, in the case where the ambient air temperature detected by the ambient air temperature sensor 37 is equal to or higher than the predetermined threshold ambient temperature, the CPU 210 closes each of the open/close valves 26ab to 26cb to regulate the amount of the refrigerant flowing through each of the first refrigerant path 23a to third refrigerant path 23c. Accordingly, it is possible to suppress degradation in heating capacity resulting from reduction in the circulation volume of the refrigerant at lower ambient air temperatures while correcting the bias of the flow rate of refrigerant among the refrigerant paths.

The CPU 210 may regulate to some extent the amount of the refrigerant flowing through each of the first refrigerant path 23a to the third refrigerant path 23c even in the case where the ambient air temperature detected by the ambient air temperature sensor 37 is equal to or higher than the threshold ambient air temperature. Accordingly, in the case where the ambient air temperature is equal to or higher than the threshold ambient air temperature, the CPU 210 decreases the amount of the refrigerant flowing through each of the first refrigerant path 23a to the third refrigerant path 23c as compared to the case where the ambient air temperature is lower than the threshold ambient air temperature. In this case, when the ambient air temperature is equal to or higher than the threshold ambient air temperature, the CPU 210 may adjust the amount of the refrigerant flowing through each of the first refrigerant path 23a to the third refrigerant path 23c to be equal to or lower than (or almost the same as) the amount of the refrigerant flowing through each of the fourth refrigerant path 23d to the seventh refrigerant path 23g. This adjustment can be made by use of flow rate adjustment valves described later, for example.

In the embodiment described above, the first flow rate balancer 26a to the third flow rate balancer 26c have the capillary tubes 26aa to 26ca, the open/close valves 26ab to 26cb, and the bypass pipes 26ac to 26cc respectively. Instead of this, the first flow rate balancer 26a to the third flow rate balancer 26c may be flow rate adjustment valves (for example, electronic expansion valves). In this case, when the ambient air temperature is lower than the threshold ambient air temperature, the CPU 210 may open fully the flow rate adjustment valves, for example. When the ambient air temperature is equal to or higher than the threshold ambient air temperature, the CPU 210 may set the degree of opening of each flow rate adjustment valve to a predetermined value. For example, the CPU 210 may adjust the degree of opening of the flow rate adjustment valve such that the amount of the refrigerant flowing through the refrigerant path provided with the flow rate adjustment valve are equal to or lower than (or almost the same as) the amount of the refrigerant flowing through the refrigerant path not provided with the flow rate balancer.

In this embodiment, the capillary tubes 26aa to 26ca of the respective first flow rate balancer 26a to third flow rate balancer 26c have the same flow passage resistance. Instead of this, the flow passage resistance of the capillary tube 26aa included in the lowest first refrigerant path 23a may be higher than the flow passage resistance of each of the other capillary tubes 26ba and 26ca. In this manner, by making uneven the flow passage resistances of the capillary tubes 26aa to 26ca (for example, setting the flow passage resistances to be different from one another), the regulated flow rates of the refrigerant in the refrigerant paths may be made uneven (for example, made different from each other). That is, the flow passage resistances of the capillary tubes 26aa to 26ca may be selected such that the regulated flow rates of the refrigerant flowing through the first refrigerant path 23a to the third refrigerant path 23c become uneven.

When the first flow rate balancer 26a to the third flow rate balancer 26c are flow rate adjustment valves (expansion valves), the CPU 210 may set the degree of opening of the flow rate adjustment valve included in the lowest first refrigerant path 23a to be smaller than the degree of opening of each of the other flow rate adjustment valves. In this manner, the CPU 210 may make uneven the degrees of opening of the flow rate adjustment valves to make uneven the regulated flow rates of the refrigerant flowing through the refrigerant paths. That is, the CPU 210 may control the degrees of opening of the flow rate adjustment valves such that the regulated flow rates of the refrigerant flowing through the first refrigerant path 23a to the third refrigerant path 23c become uneven.

In this embodiment, the flow rate balancer is included in each of the first refrigerant path 23a to the third refrigerant path 23c. The flow rate balancer may be included in at least the lowest first refrigerant path 23a out of the refrigerant paths vertically disposed in parallel.

The first refrigerant path 23a to the third refrigerant path 23c may be the same in structure as the fourth refrigerant path 23d to the seventh refrigerant path 23g except for including the respective first flow rate balancer 26a to third flow rate balancer 26c.

The first refrigerant path 23a to the third refrigerant path 23c do not necessarily have to include the first flow rate balancer 26a to the third flow rate balancer 26c. The first refrigerant path 23a to the third refrigerant path 23c merely need to be flow rate-variable refrigerant paths structured to be capable of being regulated in flow rate by the CPU 210. The flow rate-variable refrigerant path may be disposed in at least the lowest one of the refrigerant paths vertically disposed in parallel.

The air conditioner according to the embodiment of the present disclosure may be any one of the following first to fifth air conditioners.

The first air conditioner is an air conditioner having an outdoor heat exchanger with a plurality of refrigerant paths and an ambient air temperature detection unit detecting the ambient air temperature. At least one of the plurality of refrigerant paths has a flow rate balancing unit that switches operations on whether or not to regulate the flow rate of a refrigerant flowing through the refrigerant path. When the outdoor heat exchanger serves as an evaporator, the flow rate balancing unit does not regulate the flow rate of the refrigerant in the case where the ambient air temperature detected by the ambient air temperature detection unit is lower than a predetermined threshold ambient air temperature. When the outdoor heat exchanger serves as an evaporator, the flow rate balancing unit regulates the flow rate of the refrigerant in the case where the ambient air temperature detected by the ambient air temperature detection unit is higher than the threshold ambient air temperature,.

In the second air conditioner according to the first air conditioner, the flow rate balancing unit has a flow rate regulation unit that regulates the flow rate of the refrigerant flowing through the refrigerant path with the flow rate balancing unit and a bypass pipe that includes an open/close unit and bypasses the flow rate regulation unit. When the outdoor heat exchanger serves as an evaporator, the open/close unit is opened in the case where the ambient air temperature detected by the ambient air temperature detection unit is lower than the threshold ambient air temperature. When the outdoor heat exchanger serves as an evaporator, the open/close unit is closed in the case where hen the ambient air temperature detected by the ambient air temperature detection unit is equal to or higher than the threshold ambient air temperature.

In the third air conditioner according to the first or second air conditioner, when the flow rate balancing unit is provided in a plurality of refrigerant paths, the flow rate regulation unit is selected such that the regulated flow rates of the refrigerant are different among the plurality of paths.

In the fourth air conditioner according to the first air conditioner, the flow rate balancing unit is composed of a flow rate adjustment valve. When the outdoor heat exchanger serves as an evaporator, the flow rate adjustment valve is fully opened in the case where the ambient air temperature detected by the ambient air temperature detection unit is lower than the threshold ambient air temperature. When the outdoor heat exchanger serves as an evaporator, the flow rate adjustment valve is opened at a predetermined degree in the case where the ambient air temperature detected by the ambient air temperature detection unit is equal to or higher than the threshold ambient air temperature. When the flow rate balancing unit is provided in a plurality of refrigerant paths, the degree of opening of the flow rate adjustment valve is controlled such that the regulated flow rates of the refrigerant are different among the plurality of paths.

In the fifth air conditioner according to the first to fourth air conditioners, the outdoor heat exchanger has the plurality of refrigerant paths vertically disposed in parallel and the flow rate balancing unit provided in at least the lowest refrigerant path.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. An outdoor unit (2) of an air conditioner (1), comprising:
an outdoor heat exchanger (23) provided with a plurality of refrigerant paths (23a to 23g), including a flow rate-variable refrigerant path (23a to 23c) with a flow rate balancer, and including refrigerant paths (23d to 23g) without a flow rate balancer;
an ambient air temperature detector (37) that detects an ambient air temperature; and
a controller (210);
**characterized in that** the controller (210) is adapted to decrease a flow rate of a refrigerant flowing into the flow rate-variable refrigerant path (23a to 23c) in a case where the ambient air temperature detected by the ambient air temperature detector (37) is equal to or higher than a threshold ambient air temperature as compared to a case where the ambient air temperature is lower than the threshold ambient air temperature, when the outdoor heat exchanger (23) serves as an evaporator.

2. The outdoor unit (2) of the air conditioner (1) according to claim 1, wherein
the controller (210) regulates the flow rate of the refrigerant flowing into the flow rate-variable refrigerant path (23a to 23c) by decreasing the flow rate of the refrigerant in the case where the ambient air temperature is equal to or higher than the threshold ambient air temperature, when the outdoor heat exchanger (23) serves as an evaporator, and
the controller (210) does not regulate the flow rate of the refrigerant flowing into the flow rate-variable refrigerant path (23a to 23c) in the case where the ambient air temperature is lower than the threshold ambient air temperature, when the outdoor heat exchanger (23) serves as an evaporator.

3. The outdoor unit (2) of the air conditioner (1) according to claim 1 or 2, wherein
the flow rate-variable refrigerant path (23a to 23c) is the refrigerant path (23a to 23g) with a flow rate balancer (26a to 26c), and
the controller (210) uses the flow rate balancer (26a to 26c) to regulate the flow rate of the refrigerant flowing into the flow rate-variable refrigerant path (23a to 23c).

4. The outdoor unit (2) of the air conditioner (1) according to claim 3, wherein
the flow rate balancer (26a to 26c) includes a flow rate regulator (26aa to 26ca) that regulates the flow rate of the refrigerant flowing into the flow rate-variable refrigerant path (23a to 23c), a bypass pipe (26ac to 26cc) that bypasses the flow rate regulator (26aa to 26ca), and an open/close device (26ab to 26cb) that allows passage of the refrigerant through the bypass pipe (26ac to 26cc) when being opened and that shuts off the passage of the refrigerant through the bypass pipe (26ac to 26cc) when being closed,
the controller (210) opens the open/close device (26ab to 26cb) in the case where the ambient air temperature is lower than the threshold ambient air temperature, when the outdoor heat exchanger (23) serves as an evaporator, and
the controller (210) closes the open/close device (26ab to 26cb) in the case where the ambient air temperature is equal to or higher than the threshold ambient air temperature, when the outdoor heat exchanger (23) serves as an evaporator.

5. The outdoor unit (2) of the air conditioner (1) according to claim 4, comprising
a plurality of the flow rate-variable refrigerant paths (23a to 23c), wherein
flow passage resistance of the flow rate regulator (26aa to 26ca) of the flow rate balancer (26a to 26c) included in each of the flow rate-variable refrigerant paths (23a to 23c) is selected such that the regulated amount of the flow rate of the refrigerant flowing into each of the plurality of flow rate-variable refrigerant paths (23a to 23c) becomes uneven.

6. The outdoor unit (2) of the air conditioner (1) according to claim 3, wherein
the flow rate balancer (26a to 26c) is a flow rate adjustment valve,
the controller (210) fully opens the flow rate adjustment valve in the case where the ambient air temperature is lower than the threshold ambient air temperature, when the outdoor heat exchanger (23) serves as an evaporator, and
the controller (210) sets the degree of opening of the flow rate adjustment valve to a predetermined value in the case where the ambient air temperature is equal to or higher than the threshold ambient air temperature, when the outdoor heat exchanger (23) serves as an evaporator.

7. The outdoor unit (2) of the air conditioner (1) according to claim 6, comprising
a plurality of the flow rate-variable refrigerant paths (23a to 23c), wherein
the controller (210) controls the degree of opening of the flow rate adjustment valve such that the regulated amount of the flow rate of the refrigerant flowing into each of the plurality of flow rate-variable refrigerant paths (23a to 23c) becomes uneven.

8. The outdoor unit (2) of an air conditioner according to any one of claims 1 to 7, wherein
in the outdoor heat exchanger (23), the plurality of refrigerant paths (23a to 23g) is disposed vertically in parallel, the flow rate-variable refrigerant path (23a) being disposed in at least the bottom of the plurality of refrigerant paths (23a to 23g).

9. An air conditioner (1) comprising:
the outdoor unit (2) according to any one of claims 1 to 8;
an indoor unit (5a to 5c); and
a pipe (8a, 8b, 8c, and 9) that couples the outdoor unit and the indoor unit.

## Patentansprüche

1. Außeneinheit (2) einer Klimaanlage (1), umfassend:
einen Außenwärmetauscher (23), der mit mehreren Kühlmittelwegen (23a bis 23g) vorgesehen ist, einschließlich eines Kühlmittelwegs (23a bis 23c) mit variabler Strömungsrate mit einer Strömungsraten-Ausgleichseinrichtung und einschließlich Kühlmittelwegen (23d bis 23g) ohne Strömungsraten-Ausgleichseinrichtung;
einen Umgebungslufttemperaturfühler (37), der eine Umgebungslufttemperatur erfasst, und
eine Steuerung (210);
**dadurch gekennzeichnet, dass** die Steuerung (210) ausgelegt ist, um eine Strömungsrate eines Kühlmittels, das in den Kühlmittelweg (23a bis 23c) mit variabler Strömungsrate strömt, für den Fall zu verringern, dass die durch den Umgebungslufttemperaturfühler (37) erfasste Umgebungslufttemperatur größer oder gleich einer Schwellenumgebungslufttemperatur ist, im Vergleich zu dem Fall, dass die Umgebungslufttemperatur kleiner ist als die Schwellenumgebungslufttemperatur, wenn der Außenwärmetauscher (23) als ein Verdampfer dient.

2. Außeneinheit (2) der Klimaanlage (1) nach Anspruch 1, wobei die Steuerung (210) die Strömungsrate des Kühlmittels, das in den Kühlmittelweg (23a bis 23c) mit variabler Strömungsrate strömt, für den Fall durch Verringern der Strömungsrate des Kühlmittels regelt, dass die Umgebungslufttemperatur größer oder gleich der Schwellenumgebungslufttemperatur ist, wenn der Außenwärmetauscher (23) als ein Verdampfer dient, und die Steuerung (210) die Strömungsrate des Kühlmittels, das in den Kühlmittelweg (23a bis 23c) mit variabler Strömungsrate strömt, für den Fall nicht regelt, dass die Umgebungslufttemperatur kleiner ist als die Schwellenumgebungslufttemperatur, wenn der Außenwärmetauscher (23) als ein Verdampfer dient.

3. Außeneinheit (2) der Klimaanlage (1) nach Anspruch 1 oder 2, wobei
der Kühlmittelweg (23a bis 23c) mit variabler Strömungsrate der Kühlmittelweg (23a bis 23g) mit einer Strömungsraten-Ausgleichseinrichtung (26a bis 26c) ist und
die Steuerung (210) die Strömungsraten-Ausgleichseinrichtung (26a bis 26c) verwendet, um die Strömungsrate des Kühlmittels, das in den Kühlmittelweg (23a bis 23c) mit verstellbarer Strömungsrate strömt, zu regeln.

4. Außeneinheit (2) der Klimaanlage (1) nach Anspruch 3, wobei die Strömungsraten-Ausgleichseinrichtung (26a bis 26c) einen Strömungsraten-Regler (26aa bis 26ca), der die Strömungsrate des Kühlmittels, das in den Kühlmittelweg (23a bis 23c) mit variabler Strömungsrate strömt, regelt, ein Umgehungsrohr (26ac bis 26cc), das den Strömungsraten-Regler (26aa bis 26ca) umgeht, und eine Öffnungs/Schließ-Vorrichtung (26ab bis 26cb), die ein Durchströmen des Kühlmittels durch das Umgehungsrohr (26ac bis 26cc) ermöglicht, wenn sie geöffnet ist, und die das Durchströmen des Kühlmittels durch das Umgehungsrohr (26ac bis 26cc) absperrt, wenn sie geschlossen ist, aufweist,
die Steuerung (210) die Öffnungs/Schließ-Vorrichtung (26ab bis 26cb) für den Fall öffnet, dass die Umgebungslufttemperatur kleiner ist als die Schwellenumgebungslufttemperatur, wenn der Außenwärmetauscher (23) als ein Verdampfer dient, und
die Steuerung (210) die Öffnungs/Schließ-Vorrichtung (26ab bis 26cb) für den Fall schließt, dass die Umgebungslufttemperatur größer oder gleich der Schwellenumgebungslufttemperatur ist, wenn der Außenwärmetauscher (23) als ein Verdampfer dient.

5. Außeneinheit (2) der Klimaanlage (1) nach Anspruch 4, umfassend
mehrere der Kühlmittelwege (23a bis 23c) mit variabler Strömungsrate, wobei
ein Strömungsdurchgangswiderstand des Strömungsraten-Reglers (26aa bis 26ca) der Strömungsraten-Ausgleichseinrichtung (26a bis 26c), der in jedem der Kühlmittelwege (23a bis 23c) mit variabler Strömungsrate enthalten ist, derart ausgewählt wird, dass der geregelte Betrag der Strömungsrate des Kühlmittels, das in jeden der mehreren Kühlmittelwege (23a bis 23c) mit variabler Strömungsrate strömt, ungleichmäßig wird.

6. Außeneinheit (2) der Klimaanlage (1) nach Anspruch 3, wobei die Strömungsraten-Ausgleichseinrichtung (26a bis 26c) ein Strömungsraten-Einstellventil ist,
die Steuerung (210) das Strömungsraten-Einstellventil für den Fall vollständig öffnet, dass die Umgebungslufttemperatur kleiner ist als die Schwellenumgebungslufttemperatur, wenn der Außenwärmetauscher (23) als ein Verdampfer dient, und
die Steuerung (210) den Öffnungsgrad des Strömungsraten-Einstellventils für den Fall auf einen vorbestimmten Wert festlegt, dass die Umgebungslufttemperatur größer oder gleich der Schwellenumgebungslufttemperatur ist, wenn der Außenwärmetauscher (23) als ein Verdampfer dient.

7. Außeneinheit (2) der Klimaanlage (1) nach Anspruch 6, umfassend
mehrere der Kühlmittelwege (23a bis 23c) mit variabler Strömungsrate, wobei
die Steuerung (210) den Öffnungsgrad des Strömungsraten-Einstellventils derart steuert, dass der geregelte Betrag der Strömungsrate des Kühlmittels, das in jeden der mehreren Kühlmittelwege (23a bis 23c) mit variabler Strömungsrate strömt, ungleichmäßig wird.

8. Außeneinheit (2) einer Klimaanlage nach einem der Ansprüche 1 bis 7, wobei
die mehreren Kühlmittelwege (23a bis 23g) in dem Außenwärmetauscher (23) vertikal parallel zueinander angeordnet sind, wobei der Kühlmittelweg (23a) mit variabler Strömungsrate als unterster der mehreren Kühlmittelwege (23a bis 23g) angeordnet ist.

9. Klimaanlage (1), umfassend:
die Außeneinheit (2) nach einem der Ansprüche 1 bis 8;
eine Inneneinheit (5a bis 5c); und
ein Rohr (8a, 8b, 8c und 9), das die Außeneinheit und die Inneneinheit koppelt.

## Revendications

1. Unité extérieure (2) d'un climatiseur (1), comprenant :
un échangeur de chaleur extérieur (23) pourvu d'une pluralité de chemins de réfrigérant (23a à 23g), comprenant un chemin de réfrigérant à débit variable (23a à 23c) avec un équilibreur de débit, et comprenant des chemins de réfrigérant (23d à 23g) sans équilibreur de débit;
un détecteur de température d'air ambiant (37) qui détecte une température d'air ambiant; et
un contrôleur (210) ;
**caractérisé en ce que** le contrôleur (210) est conçu pour diminuer un débit d'un réfrigérant s'écoulant dans le chemin de réfrigérant à débit variable (23a à 23c) dans le cas où la température de l'air ambiant détectée par le détecteur de température d'air ambiant (37) est égale ou supérieure à une température d'air ambiant de seuil par rapport à un cas où la température de l'air ambiant est inférieure à la température d'air ambiant de seuil, lorsque l'échangeur de chaleur extérieur (23) sert d'évaporateur.

2. Unité extérieure (2) du climatiseur (1) selon la revendication 1, dans laquelle
le contrôleur (210) régule le débit du réfrigérant s'écoulant dans le chemin de réfrigérant à débit variable (23a à 23c) en diminuant le débit du réfrigérant dans le cas où la température de l'air ambiant est égale ou supérieure à la température d'air ambiant de seuil, lorsque l'échangeur de chaleur extérieur (23) sert d'évaporateur, et
le contrôleur (210) ne régule pas le débit du réfrigérant s'écoulant dans le chemin de réfrigérant à débit variable (23a à 23c) dans le cas où la température de l'air ambiant est inférieure à la température d'air ambiant de seuil, lorsque l'échangeur de chaleur extérieur (23) sert d'évaporateur.

3. Unité extérieure (2) du climatiseur (1) selon la revendication 1 ou 2, dans laquelle
le chemin de réfrigérant à débit variable (23a à 23c) est le chemin de réfrigérant (23a à 23g) avec un équilibreur de débit (26a à 26c), et
le contrôleur (210) utilise l'équilibreur de débit (26a à 26c) pour réguler le débit du réfrigérant s'écoulant dans le chemin de réfrigérant à débit variable (23a à 23c).

4. Unité extérieure (2) du climatiseur (1) selon la revendication 3, dans laquelle
l'équilibreur de débit (26a à 26c) comprend un régulateur de débit (26aa à 26ca) qui régule le débit du réfrigérant s'écoulant dans le chemin de réfrigérant à débit variable (23a à 23c), un tuyau de dérivation (26ac à 26cc) qui contourne le régulateur de débit (26aa à 26ca), et un dispositif d'ouverture/fermeture (26ab à 26cb) qui permet le passage du réfrigérant à travers le tuyau de dérivation (26ac à 26cc) lorsqu'il est ouvert et qui ferme le passage du réfrigérant à travers le tuyau de dérivation (26ac à 26cc) lorsqu'il est fermé,
le contrôleur (210) ouvre le dispositif d'ouverture/fermeture (26ab à 26cb) dans le cas où la température de l'air ambiant est inférieure à la température d'air ambiant de seuil, lorsque l'échangeur de chaleur extérieur (23) sert d'évaporateur, et
le contrôleur (210) ferme le dispositif d'ouverture/fermeture (26ab à 26cb) dans le cas où la température de l'air ambiant est égale ou supérieure à la température d'air ambiant de seuil, lorsque l'échangeur de chaleur extérieur (23) sert d'évaporateur.

5. Unité extérieure (2) du climatiseur (1) selon la revendication 4, comprenant
une pluralité de chemins de réfrigérant à débit variable (23a à 23c), dans laquelle
la résistance au passage d'écoulement du régulateur de débit (26aa à 26ca) de l'équilibreur de débit (26a à 26c) inclus dans chacun des chemins de réfrigérant à débit variable (23a à 23c) est sélectionnée de telle sorte que la quantité régulée du débit du réfrigérant s'écoulant dans chacun de la pluralité de chemins de réfrigérant à débit variable (23a à 23c) devient inégale.

6. Unité extérieure (2) du climatiseur (1) selon la revendication 3, dans laquelle
l'équilibreur de débit (26a à 26c) est une vanne de réglage de débit,
le contrôleur (210) ouvre complètement la vanne de réglage du débit dans le cas où la température de l'air ambiant est inférieure à la température d'air ambiant de seuil, lorsque l'échangeur de chaleur extérieur (23) sert d'évaporateur, et le contrôleur (210) règle le degré d'ouverture de la vanne de réglage de débit à une valeur prédéterminée dans le cas où la température de l'air ambiant est égale ou supérieure à la température d'air ambiant de seuil, lorsque l'échangeur de chaleur extérieur (23) sert d'évaporateur.

7. Unité extérieure (2) du climatiseur (1) selon la revendication 6, comprenant
une pluralité de chemins de réfrigérant à débit variable (23a à 23c), dans laquelle
le contrôleur (210) commande le degré d'ouverture de la vanne de réglage de débit de sorte que la quantité régulée du débit du réfrigérant s'écoulant dans chacun de la pluralité de chemins de réfrigérant à débit variable (23a à 23c) devient inégale.

8. Unité extérieure (2) d'un climatiseur selon l'une quelconque des revendications 1 à 7, dans laquelle
dans l'échangeur de chaleur extérieur (23), la pluralité de chemins de réfrigérant (23a à 23g) est disposée verticalement en parallèle, le chemin de réfrigérant à débit variable (23a) étant disposé dans au moins le fond de la pluralité de chemins de réfrigérant (23a à 23g).

9. Climatiseur (1) comprenant :
l'unité extérieure (2) selon l'une quelconque des revendications 1 à 8;
une unité intérieure (5a à 5c) ; et
un tuyau (8a, 8b, 8c et 9) qui couple l'unité extérieure et l'unité intérieure.
